# NEUE EUROPÄISCHE PATENTSCHRIFT

(11) **EP 2 452 972 B2**
(45) Veröffentlichungstag und Bekanntmachung des Hinweises auf die Entscheidung über den Einspruch: **13.04.2022**
(45) Hinweis auf die Patenterteilung: 24.07.2013
(21) Anmeldenummer: 10190627.9
(22) Anmeldetag: 10.11.2010
(51) Int. Cl.: C08L 7/00, B60C 1/00, C08K 5/01, C08L 9/00, C08L 57/02

(54) **Nutzfahrzeugluftreifen**
Commercial vehicle pneumatic tyre
Pneu de véhicule utilitaire

(43) Veröffentlichungstag der Anmeldung: 16.05.2012
(73) Patentinhaber: Continental Reifen Deutschland GmbH, 30165 Hannover (DE)
(72) Erfinder: Daldrup, Norbert, 31556 Wiedenbrügge (DE); Recker, Carla, Dr., 30167 Hannover (DE); Jocher, Christoph, Dr., 30823 Garbsen (DE); Torbrügge, Thorsten, Dr., 30855 Langenhagen (DE); Kölle, Philipp, Dr., 70199 Stuttgart (DE); Kramer, Thomas, Dr., 32049 Herford (DE); Dettmer, Fabian, Dr., 38106 Braunschweig (DE)
(74) Vertreter: Continental Corporation

(56) Entgegenhaltungen:
- EP-A1- 1 526 002
- EP-A1- 1 589 068
- EP-A1- 1 808 456
- WO-A1-2008/133676
- WO-A2-2006/047509
- US-B1- 6 214 919

## Beschreibung

Die Erfindung betrifft einen Nutzfahrzeugluftreifen mit einem Laufstreifen, wobei zumindest der mit der Fahrbahn in Berührung kommende Teil des Laufstreifens aus einer mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten und der Füllstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. Zu den Eigenschaften, die in Wechselwirkung stehen und bei denen die Verbesserung der einen Eigenschaft üblicherweise mit der Verschlechterung zumindest einer anderen Eigenschaft einher geht, zählt das Trio aus Abrieb, Rollwiderstand und Nasshaftung.

Durch den Einsatz von Polybutadien (BR) in Kautschukmischungen für Reifenlaufstreifen kann beispielsweise das Abriebverhalten verbessert werden, allerdings geschieht dies auf Kosten der Nasshaftung. Bei Nutzfahrzeugreifen spielt jedoch auch der Spritverbrauch eine wichtige Rolle, so dass die Reifen einen möglichst geringen Rollwiderstand aufweisen sollten. Verbesserungen im Bereich von Nutzfahrzeugreifen z. B. beim Abrieb sollten daher auf einem möglichst gleichbleibenden Niveau des Rollwiderstandes erfolgen.

Aus der EP 0 899 287 B1 ist es bereits bekannt, das Abriebverhalten und die Nasshaftung eines Fahrzeugluftreifens dadurch zu verbessern, dass die Kautschukmischung für den Laufstreifen 50 bis 90 phr eines Kautschuks mit einer Glasumwandlungstemperatur T_{g} von -110 bis -80 °C, z. B. Polybutadien, 10 bis 50 phr eines Kautschuks mit einer Glasumwandlungstemperatur T_{g} von -79 bis +20 °C, z. B. E-SBR, und 15 bis 50 phr eines Harzes, ausgewählt aus er Gruppe bestehend aus Kohlenwasserstoffharzen, Phenol/Acetylen-Harzen, von Kolophonium abgeleiteten Harzen oder deren Mischungen, enthält.

Die US 7,084,228 B2 offenbart zur Verbesserung des Abriebverhaltens von Fahrzeugluftreifen den Einsatz von Harzen in der Laufstreifenmischung in Kombination mit 40 bis 100 phr eines Dienelastomers mit einer Glasumwandlungstemperatur T_{g} von -65 bis -10 °C, z. B. S-SBR, und 0 bis 60 phr eines Dienelastomers mit einer Glasumwandlungstemperatur T_{g} von -110 bis -80 °C, z. B. Polybutadien.

Auch aus der WO 02/072688 A1 und der WO 02/072689 A1 ist schon die Kombination von speziellen Harzen mit Kautschuken mit niedrigen Glasumwandlungstemperaturen T_{g} in Reifenlaufstreifenmischungen zur Verringerung der Abriebs von Fahrzeugluftreifen bekannt.

In den vorgenannten Schriften wird als Dienelastomer mit einer Glasumwandlungstemperatur T_{g} von -110 bis -80 °C Polybutadien eingesetzt. Mischungszusammensetzungen, die üblicherweise für Laufstreifen von Nutzfahrzeugen eingesetzt werden, werden in den Schriften nicht explizit offenbart.

Die EP 1526002 A1 betrifft einen Fahrzeugluftreifen, dessen Laufstreifenbase (bei Laufstreifen mit Cap/Base-Aufbau der Teil des Laufstreifens, der *nicht* mit der Fahrbahn in Berührung kommt) aus einer Kautschukmischung besteht, die u.a. zumindest einen Dienkautschuk und 0,5 bis 10 phr zumindest eines aromatischen Kohlenwasserstoffharzes enthält. In dieser Basemischung soll der Zielkonflikt zwischen Grünklebrigkeit, hohem statischen Modul und niedrigem Heat-Build-Up (Wärmeaufbau) gelöst werden.

Auch die EP 1589068 A1 betrifft eine Kautschukmischung, insbesondere für die Laufstreifenbase von Fahrzeugluftreifen. Diese ist frei von aromatischen Prozessölen und enthält Naturkautschuk (NR) und Butadien-Kautschuk (BR) im Verschnitt sowie 4 phr Klebharz. Die EP 1589068 A1 hat zur Aufgabe, Kautschukmischungen bereitzustellen, deren Vulkanisate sich durch eine höhere Flexibilität bei gleichzeitig hoher Steifigkeit (Modul) auszeichnen, woraus sich für die Anwendung in einer Base eines Fahrzeugluftreifens ein hoher Fahrkomfort und ein besseres Handling ergeben sollen.

In der WO 2008/133676 A1 wird eine Gummilage zwischen Karkasse und Laufstreifen ("cushion gum") für die verbesserte Anbindung des Laufstreifens eines Reifens an die Karkasse bei der Runderneuerung von Reifen ("retread") offenbart. Diese Lage enthält 5 bis 60 phr eines weichmachenden Kohlenwasserstoffharzes, wobei in einer Kautschukmischung, die 100 phr NR enthält, mit 15 phr eines Terpenharzes anstelle von 15 phr Öl verbesserte Reißeigenschaften erzielt werden.

Die EP 1808456 A1 betrifft eine Kautschukmischung ohne aromatische Prozessöle, insbesondere für Laufstreifen von Fahrzeugluftreifen, die zumindest einen Dienkautschuk und 5 bis 30 phr zumindest eines Harzes enthält. Eine solche Kautschukmischung mit ESBR (emulsionspolymerisiertem Styrol-Buatdien-Kautschuk), 80 phr des Rußes N 121 und einer Kombination aus 20 phr TDAE und 10 phr eines Cumaron-Inden-Harzes mit einem Erweichungspunkt von 10 °C erzielt im Laufstreifen von Fahrzeugluftreifen verbesserte Reifeneigenschaften bei gleichbleibendem Rollwiderstand.

Der Erfindung liegt die Aufgabe zugrunde, Nutzfahrzeugluftreifen bereitzustellen, bei denen der Zielkonflikt aus Abrieb, Rollwiderstand und Nassgriff auf einem höheren Niveau gelöst ist.

Gelöst wird die Aufgabe erfindungsgemäß dadurch, dass zumindest der mit der Fahrbahn in Berührung kommende Teil des Laufstreifens aus einer mit Schwefel vulkanisierten Kautschukmischung besteht, die
- 90 bis 50 phr (Gewichtsteile, bezogen auf 100 Gewichtsteile der gesamten Kautschuke in der Mischung) Naturkautschuk,
- 10 bis 50 phr zumindest eines Polybutadiens mit einer Glasumwandlungstemperatur T_{g} von -110 bis -65 °C und
- 5 bis 50 phr zumindest eines aromatischen Kohlenwasserstoffharzes mit einem Erweichungspunkt (Ring und Kugel gemäß ASTM E 28) von 0 bis 150 °C und einem mittleren Molekulargewicht Mₙ von weniger als 2000 g/mol sowie einer Polydispersität D = M_{w}/Mₙ von 1 bis 5 enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Durch die spezielle Kombination von Naturkautschuk mit zumindest einem Polybutadien mit niedriger Glasumwandlungstemperatur und zumindest einem speziellen Harz mit den vorgenannten Eigenschaften in den genannten Mengen gelingt es, das Abriebverhalten einer Laufstreifenmischung deutlich zu verbessern, wobei gleichzeitig die üblicherweise durch die Zugabe von Polybutadien zu verzeichnende Abnahme der Nasshaftung nicht beobachtet wird und der Rollwiderstand beim resultierenden Reifen gering ist.

Die Kautschukmischung für den mit der Fahrbahn in Berührung kommenden Teil des Laufstreifens enthält 90 bis 50 phr Naturkautschuk (NR), wobei es sich um auf biochemischem Wege in Pflanzen synthetisiertes Polyisopren mit einem cis-1,4-Gehalt von mehr als 99 % handelt.

Als weiteren Kautschuk enthält die Kautschukmischung 10 bis 50 phr zumindest eines Polybutadiens (BR) mit einer Glasumwandlungstemperatur T_{g} von -110 bis -65 °C. Polybutadiene mit Glasumwandlungstemperaturen in diesem Bereich lassen sich z. B. durch Lösungspolymerisation in Anwesenheit von Katalysatoren vom Typ der seltenen Erden erhalten.

Zusätzlich zu Naturkautschuk und den vorgenannten Polybutadienen kann die Kautschukmischung für den Laufstreifen auch noch andere Kautschuktypen, wie z. B. Polybutadiene mit höheren Glasübergangstemperaturen, synthetisches Polyisopren, Styrol-Butadien-Copolymere (SBR), Styrol-Isopren-Butadien-Terpolymere, Isopren-Butadien-Copolymere, Butylkautschuk, Halobutylkautschuk oder Ethylen-Propylen-Dien-Kautschuke (EPDM) enthalten. Die anderen Kautschuktypen können dabei auch in funktionalisierter Form vorliegen.

Als besonders vorteilhaft im Hinblick auf Nassgriff, Abrieb und Rollwiderstand hat es sich herausgestellt, wenn die Kautschukmischung des Laufstreifens 80 bis 55 phr Naturkautschuk und 20 bis 45 phr zumindest eines Polybutadiens mit einer Glasumwandlungstemperatur T_{g} von -110 bis -65 °C enthält.

Gemäß einer vorteilhaften Weiterbildung der Erfindung weist das zumindest eine Polybutadien eine Glasumwandlungstemperatur T_{g} von -110 bis -85 °C auf.

Die Kautschukmischung für den mit der Fahrbahn in Berührung kommenden Teil des Laufstreifens enthält 5 bis 50 phr, vorzugsweise 5 bis 25 phr, zumindest eines aromatischen Kohlenwasserstoffharzes mit einem Erweichungspunkt (Ring und Kugel gemäß ASTM E 28) von 0 bis 150 °C und einem mittleren Molekulargewicht Mₙ von weniger als 2000 g/mol sowie einer Polydispersität D = M_{w}/Mₙ von 1 bis 5. Es können aber auch mehrere Harze im Gemisch eingesetzt werden. Vorzugsweise ist das aromatische Kohlenwasserstoffharz ausgewählt aus der Gruppe, bestehend aus C₉-, Cumaron-Inden- -Harzen, aus α-Methylstyrol hergestelltem aromatischem Harz sowie Copolymeren aus den Monomeren dieser Harztypen. Nicht erfindungsgemäß geeignete Harze sind polare Harze, wie Phenolharze, die keine Abriebverbesserung bewirken.

C₉-Harze sind Kohlenwasserstoffharze, die auf unterschiedlichen C₉-Monomeren basieren.

Gemäß einer bevorzugten Weiterbildung der Erfindung handelt es sich bei dem Kohlenwasserstoffharz um ein aus α -Methylstyrol hergestelltes aromatisches Harz. Diese Harze bewirken ein besonders gutes Abriebverhalten.

Die Kautschukmischung kann Füllstoffe enthalten, wobei unterschiedlichste dem Fachmann bekannte Füllstoffe, wie Ruß, Kieselsäure, Alumosilicate, Kreide, Stärke, Magnesiumoxid, Titandioxid oder Kautschukgele, eingesetzt werden können.

Um den Abrieb und die die Reißeigenschaften für den Nutzfahrzeugluftreifen zu optimieren, hat es sich als vorteilhaft erwiesen, wenn die Kautschukmischung des Laufstreifens weniger als 60 phr, insbesondere weniger als 50 phr, Kieselsäure enthält.

Bei den Kieselsäuren kann es sich um die für Reifenkautschukmischungen üblichen Kieselsäuren handeln. Besonders bevorzugt ist es, wenn eine fein verteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 100 bis 285 m²/g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs VN3 (Handelsname) der Firma Degussa als auch hoch dispergierbare Kieselsäuren, so genannte HD-Kieselsäuren (z. B. Ultrasil 7000 der Firma Degussa), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH₂ oder -Sₓ- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive Performance Materials, USA, oder solche, die unter dem Namen VP Si 363 von der Firma Evonik Industries, Deutschland vertrieben werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuke erfolgen kann.

Als Füllstoff enthält die Kautschukmischung für den mit der Fahrbahn in Berührung kommenden Teil des Laufstreifens gemäß einer bevorzugten Weiterbildung der Erfindung 30 bis 60 phr, vorzugsweise 45 bis 55 phr, Ruß, z. B. Ruße, die nach der ASTM-Klassifizierung der 100- oder 200-Reihe angehören wie der Ruß des Typs N121, für optimale Reiß- und Weiterreißeigenschaften beim Nutzfahrzeugeinsatz.

Die Kautschukmischung für den Laufstreifen kann außer den genannten Substanzen noch andere Zusatzstoffe, wie z. B. Weichmacher (z. B. aromatische, naphthenische oder paraffinische Mineralölweichmacher, MES (mild extraction solvate), RAE-Öle, TDAE (treated distillate aromatic extract), Öle auf Basis nachwachsender Rohstoffe (wie z. B. Rapsöl oder Faktisse), so genannte BTL-Öle (wie sie in der Anmeldung mit der Anmeldenummer DE 10 2008 035962.9 offenbart sind) oder flüssige Polymere (wie z. B. flüssiges Polybutadien)) aufweisen.

Des Weiteren kann die Kautschukmischung für den Laufstreifen übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Fettsäuren (z. B. Stearinsäure), Wachse, Harze und Mastikationshilfsmittel, wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung für den Laufstreifen vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate, Thiurambeschleuniger. Die Beschleuniger können auch in Kombination miteinander eingesetzt werden, wobei sich synergistische Effekte ergeben können.

Die Herstellung der Kautschukmischung für den Teil des Laufstreifens, der mit der Fahrbahn in Berührung kommt, erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form eines Laufstreifenrohlings gebracht. Der Laufsteifenrohling wird bei der Herstellung des Nutzfahrzeugluftreifenrohlings wie bekannt aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Nach Fertigstellung des Nutzfahrzeugreifenrohlings wird dieser in einer Vulkanisationsform vulkanisiert. Die resultierenden Nutzfahrzeugreifen zeichnen sich durch einen geringen Abrieb bei niedrigem Rollwiderstand und guter Nasshaftung aus.

Die Erfindung soll nun anhand von Vergleichs- und Ausführungsbeispielen, die in der Tabelle 1 zusammengefasst sind, näher erläutert werden.

Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V, die Mischungen für die erfindungsgemäßen Nutzfahrzeugluftreifen sind mit E gekennzeichnet. Die Mischung 1 (V) ist eine Reifenlaufstreifenmischung ohne Harz. Die Mischungen V(4) bis V(9) sind Vergleichsmischungen, die an Stelle von Naturkautschuk Styrol-Butadien-Copolymere enthalten. Bei den Mischungen, die Harz enthalten, wurden der Füllgrad sowie die Mengen an Schwefel und Beschleuniger angepasst, um die Mischungen nahezu härtegleich auszubilden, d. h. um die "Verdünnung" durch das Harz auszugleichen.

Die Mischungsherstellung erfolgte unter üblichen Bedingungen in mehreren Stufen in einem Labortangentialmischer. Aus sämtlichen Mischungen wurden Prüfkörper durch 20 minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN 53 505
- Rückprallelastizität bei Raumtemperatur und 70 °C gemäß DIN 53 512,
- Zugfestigkeit bei Raumtemperatur gemäß DIN 53 504
- Reißdehnung bei Raumtemperatur gemäß DIN 53 504
- Spannungswert (Modul) bei 50 und 300 % Dehnung bei Raumtemperatur gemäß DIN 53 504
- Weiterreißwiderstand nach Graves bei Raumtemperatur gemäß DIN 53 515
- Verlustfaktor tan δₘₐₓ bei 55 °C als Maximalwert über den Dehnungssweep aus dynamisch-mechanischer Messung gemäß DIN 53 513
- Abrieb bei Raumtemperatur gemäß DIN 53516

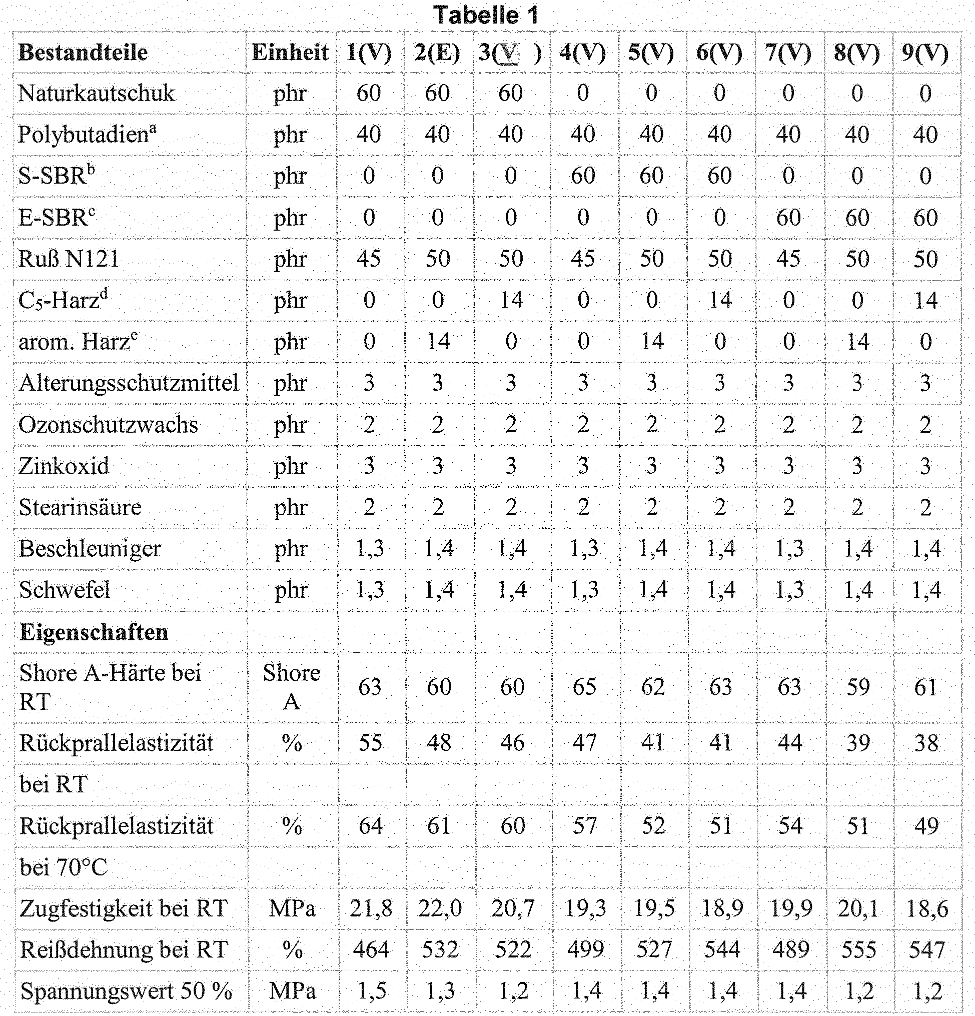

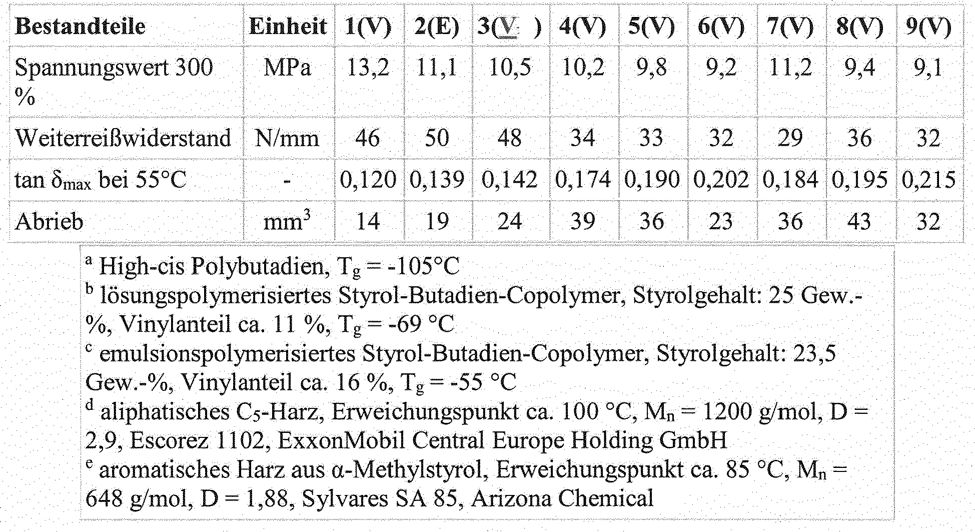

Aus der Tabelle 1 wird ersichtlich, dass durch die Kombination von Naturkautschuk mit Polybutadien und Harz eine Mischung erhalten wird, die im Reifen einen niedrigen Abrieb (s. DIN-Abrieb), geringen Rollwiderstand, was sich in einer hohen Rückprallelastizität bei 70 °C und einem niedrigen Verlustfaktor tan δₘₐₓ bei 55 °C widerspiegelt, und einen guten Nassgriff, was sich in einer niedrigen Rückprallelastizität bei Raumtemperatur widerspiegelt, bewirkt. Werden an Stelle des Naturkautschuks Styrol-Butadien-Copolymere eingesetzt (Mischungen 4(V) bis 9(V)), zeigen sich schlechtere Werte im Hinblick auf den Rollwiderstand und den Abrieb.

Bemerkenswert ist auch, dass sich die Mischungen 2(E) und 3(V) sich durch eine hohe Weiterreißfestigkeit auszeichnen, was vor allem bei Nutzfahrzeugreifen zu einer höheren Haltbarkeit führt, da Risse im Laufstreifen nicht so schnell bis zum korrosionsempfindlichen Stahlcordgürtel gelangen.

Besonders gute Werte hinsichtlich des Abriebs werden, wie Mischung 2(E) zeigt, mit aromatischen Kohlenwasserstoffharzen erzielt.

## Patentansprüche

1. Nutzfahrzeugluftreifen mit einem Laufstreifen, wobei zumindest der mit der Fahrbahn in Berührung kommende Teil des Laufstreifens aus einer mit Schwefel vulkanisierten Kautschukmischung besteht, die
- 90 bis 50 phr (Gewichtsteile, bezogen auf 100 Gewichtsteile der gesamten Kautschuke in der Mischung) Naturkautschuk,
- 10 bis 50 phr zumindest eines Polybutadiens mit einer Glasumwandlungstemperatur T_{g} von -110 bis -65 °C und
- 5 bis 50 phr zumindest eines aromatischen Kohlenwasserstoffharzes mit einem Erweichungspunkt (Ring und Kugel gemäß ASTM E 28) von 0 bis 150 °C und einem mittleren Molekulargewicht Mn von weniger als 2000 g/mol sowie einer Polydispersität D = M_{w}/Mₙ von 1 bis 5 enthält.

2. Nutzfahrzeugluftreifen nach Anspruch 1, **dadurch gekennzeichnet, dass** die Kautschukmischung des Laufstreifens 80 bis 55 phr Naturkautschuk und 20 bis 45 phr zumindest eines Polybutadiens mit einer Glasumwandlungstemperatur T_{g} von -110 bis -65 °C enthält.

3. Nutzfahrzeugluftreifen nach Anspruch 1 oder 2, **dadurch gekennzeichnet, dass** das zumindest ein Polybutadien eine Glasumwandlungstemperatur T_{g} von -110 bis -85 °C aufweist.

4. Nutzfahrzeugluftreifen nach zumindest einem der Ansprüche 1 bis 3, **dadurch gekennzeichnet, dass** das aromatische Kohlenwasserstoffharz ausgewählt ist aus der Gruppe, bestehend aus, C₉- und Cumaron-Inden- -Harzen, aus α-Methylstyrol hergestelltem aromatischem Harz sowie Copolymeren aus den Monomeren dieser Harztypen.

5. Nutzfahrzeugluftreifen nach Anspruch 4, **dadurch gekennzeichnet, dass** das aromatische Kohlenwasserstoffharz ein aus α-Methylstyrol hergestelltes Harz ist.

6. Nutzfahrzeugluftreifen nach zumindest einem der Ansprüche 1 bis 5, **dadurch gekennzeichnet, dass** die Kautschukmischung des Laufstreifens 5 bis 25 phr aromatisches Kohlenwasserstoffharz enthält.

7. Nutzfahrzeugluftreifen nach zumindest einem der Ansprüche 1 bis 6, **dadurch gekennzeichnet, dass** die Kautschukmischung des Laufstreifens weniger als 60 phr, vorzugsweise weniger als 50 phr, Kieselsäure enthält.

8. Nutzfahrzeugluftreifen nach zumindest einem der Ansprüche 1 bis 7, **dadurch gekennzeichnet, dass** die Kautschukmischung des Laufstreifens 30 bis 60 phr, vorzugsweise 45 bis 55 phr, Ruß enthält.

## Claims

1. Pneumatic tire for commercial vehicles, with a tread, where at least that part of the tread that comes into contact with the trafficway is composed of a sulfur-vulcanized rubber mixture comprising
- from 90 to 50 phr (parts by weight, based on 100 parts by weight of all of the rubbers in the mixture) of natural rubber,
- from 10 to 50 phr of at least one polybutadiene with a glass transition temperature T_{g} of from -110 to -65°C and
- from 5 to 50 phr of at least one aromatic hydrocarbon resin with a softening point (ring and ball in accordance with ASTM E 28) of from 0 to 150°C and with an average molar mass Mₙ of less than 2000 g/mol, and with a polydispersity D = M_{w}/Mₙ of from 1 to 5.

2. Pneumatic tire for commercial vehicles, according to Claim 1, **characterized in that** the rubber mixture of the tread comprises from 80 to 55 phr of natural rubber and from 20 to 45 phr of at least one polybutadiene with a glass transition temperature T_{g} of from -110 to -65°C.

3. Pneumatic tire for commercial vehicles, according to Claim 1 or 2, **characterized in that** the at least one polybutadiene has a glass transition temperature T_{g} of from - 110 to -85°C.

4. Pneumatic tire for commercial vehicles, according to at least one of Claims 1 to 3, **characterized in that** the aromatic hydrocarbon resin is one selected from the group consisting of C₉-resins, and coumarone-indene resins, aromatic resin produced from α-methylstyrene, and copolymers of the monomers of these types of resin.

5. Pneumatic tire for commercial vehicles, according to Claim 4, **characterized in that** the aromatic hydrocarbon resin is a resin produced from α-methylstyrene.

6. Pneumatic tire for commercial vehicles, according to at least one of Claims 1 to 5, **characterized in that** the rubber mixture of the tread comprises from 5 to 25 phr of aromatic hydrocarbon resin.

7. Pneumatic tire for commercial vehicles, according to at least one of Claims 1 to 6, **characterized in that** the rubber mixture of the tread comprises less than 60 phr, preferably less than 50 phr, of silica.

8. Pneumatic tire for commercial vehicles, according to at least one of Claims 1 to 7, **characterized in that** the rubber mixture of the tread comprises from 30 to 60 phr, preferably from 45 to 55 phr, of carbon black.

## Revendications

1. Pneu de véhicule utilitaire avec une bande de roulement, dans lequel au moins la partie de la bande de roulement venant en contact avec la chaussée est constituée d'un mélange de caoutchouc vulcanisé au soufre, qui contient
- 90 à 50 phr (parties en poids, rapportées à 100 parties en poids du caoutchouc total dans le mélange) de caoutchouc naturel;
- 10 à 50 phr d'au moins un polybutadiène avec une température de transition vitreuse T_{g} de -110 à -65°C,
- et 5 à 50 phr d'au moins une résine hydrocarbonée aromatique avec un point de ramollissement (avec anneau et cône suivant ASTM E 28) de 0 à 150°C et un poids moléculaire moyen Mₙ de moins de 2000 g/mole ainsi qu'un indice de polydispersité D = M_{w}/Mₙ de 1 à 5.

2. Pneu de véhicule utilitaire selon la revendication 1, **caractérisé en ce que** le mélange de caoutchouc de la bande de roulement contient 80 à 55 phr de caoutchouc naturel et 20 à 45 phr d'au moins un polybutadiène avec une température de transition vitreuse T_{g} de -110 à -65°C.

3. Pneu de véhicule utilitaire selon la revendication 1 ou 2, **caractérisé en ce que** ledit au moins un polybutadiène présente une température de transition vitreuse T_{g} de -110 à -85°C.

4. Pneu de véhicule utilitaire selon au moins une des revendications 1 à 3, **caractérisé en ce que** la résine hydrocarbonée aromatique est sélectionnée dans le groupe composé des résines C₉ et coumarone-indène, de résine aromatique produite à partir de α-méthylstyrène ainsi que de copolymères des monomères de ces types de résines.

5. Pneu de véhicule utilitaire selon la revendication 4, **caractérisé en ce que** la résine hydrocarbonée aromatique est une résine produite à partir de α-méthylstyrène.

6. Pneu de véhicule utilitaire selon au moins une des revendications 1 à 5, **caractérisé en ce que** le mélange de caoutchouc de la bande de roulement contient 5 à 25 phr de résine hydrocarbonée aromatique.

7. Pneu de véhicule utilitaire selon au moins une des revendications 1 à 6, **caractérisé en ce que** le mélange de caoutchouc de la bande de roulement contient moins de 60 phr, de préférence moins de 50 phr, d'acide silicique.

8. Pneu de véhicule utilitaire selon au moins une des revendications 1 à 7, **caractérisé en ce que** le mélange de caoutchouc de la bande de roulement contient 30 à 60 phr, de préférence 45 à 55 phr de suie.
